# EUROPÄISCHE PATENTANMELDUNG

(11) **EP 4 112 227 A1**
(43) Veröffentlichungstag der Anmeldung: **04.01.2023**
(21) Anmeldenummer: 22186726.0
(22) Anmeldetag: 09.02.2017
(51) Int. Cl.: B24B 27/06, B24B 41/06, B23Q 1/62, B23Q 1/50

(54) **TRENNMASCHINE**

(30) Priorität: 09.02.2016 DE 102016102218
(62) Teilanmeldung aus: 17704453.4
(71) Anmelder: ATM Qness GmbH, 57636 Mammelzen (DE)
(72) Erfinder: MÜLLER, Heinrich, 57635 Wölmersen (DE)
(74) Vertreter: Blumbach · Zinngrebe Patentanwälte PartG mbB

(57) **Zusammenfassung**

Die Erfindung betrifft eine Trennmaschine mit einer rotierenden Trennscheibe zum Durchführen von Trennschnitten in einem Werkstück und eine Werkstück-Positioniereinrichtung für eine solche Trennmaschine. Die Trennmaschine umfasst eine Trennscheibe und einen Antriebsmotor zum Antreiben der Trennscheibe, eine Einspannvorrichtung zum Einspannen des Werkstücks, Mittel zum maschinellen Positionieren des Werkstücks entlang einer oder zwei linearen Richtungen und zusätzlich um eine oder zwei Drehachsen und eine Hubmechanik zum Anstellen der Trennscheibe an das Werkstück, um mit der Trennscheibe Trennschnitte in dem positionierten Werkstück durchzuführen.

## Beschreibung

### Gebiet der Erfindung

Die Erfindung betrifft eine Trennmaschine mit einer rotierenden Trennscheibe zum Durchführen von Trennschnitten in einem Werkstück und eine Werkstück-Positioniereinrichtung für eine solche Trennmaschine.

### Hintergrund der Erfindung

Trennmaschinen, zum Beispiel Nasstrennschleifmaschinen werden für vielfältige Trennaufgaben eingesetzt. Beispiele für solche Trennmaschinen sind die Geräte der Serie Brillant, zum Beispiel die Trennmaschine Brillant 275 der Anmelderin, auf welche hiermit durch Referenz Bezug genommen wird.

Ein beispielhaftes Anwendungsgebiet für solche Trennmaschinen ist das Abtrennen von Probenstücken von zu untersuchenden Prüflingen, zum Beispiel in der Automobilindustrie. Hiermit können selektiv an verschiedenen Stellen eines Prüflings zum Beispiel Gefügestrukturen untersucht werden. Hierzu werden mit der Trennmaschine Probestücke aus dem Prüfling herausgeschnitten. Mit dem Nasstrennverfahren ist es möglich, die Probenstücke so zu entnehmen, dass Gefügeschäden durch den Trennschnitt an der späteren Prüffläche gering gehalten werden.

In vielen Fällen reichen ein oder zwei Trennschnitte um ein Probenstück vom Prüfling zu lösen. Für diese Fälle werden standardisierte Spannwerkzeuge verwendet, um den Prüfling in der Trennmaschine zu fixieren und dann den Trennschnitt zu platzieren und auszuführen. Durch immer größer werdende Anforderungen an Bauteile, zum Beispiel in der Automobilindustrie hinsichtlich ihrer kompakten Bauweise, ihres Gewichts, ihrer Materialeigenschaften, ihres Herstellungsverfahren etc. bei gleichzeitig erhöhten Anforderungen an die Qualität und Zuverlässigkeit der Bauteile werden allerdings auch die Prüfvorgaben aufwendiger und umfangreicher. Dadurch können zum Beispiel Trennaufgaben entstehen, bei welchen, je nach Bauteil, eine Mehrzahl, zum Beispiel 5 bis 10 Probenstücke aus einem Prüfling entnommen werden sollen, was entsprechend viele Trennschnitte ggf. in unterschiedlichen Winkellagen erfordert.

Nachteilig bei den bisher bekannten Trennmaschinen ist, dass solch komplexe Trennaufgaben manuelle Benutzereingriffe erfordern können, insbesondere kann es erforderlich sein, den Prüfling bzw. das Werkstück ggf. sogar mehrfach umzuspannen, was umständlich und zeitintensiv ist. Hier setzt die vorliegende Erfindung an.

### Allgemeine Beschreibung der Erfindung

Die Erfindung hat sich daher die Aufgabe gestellt, eine Trennmaschine bereit zu stellen, mit welcher komplexe Trennaufgaben mit wenig manuellem Aufwand für den Benutzer durchführbar sind.

Eine weitere Aufgabe der Erfindung ist es, eine Trennmaschine bereit zu stellen, mit welcher Trennschnitte in unterschiedlichen Winkellagen schnell und einfach durchzuführen sind.

Noch eine Aufgabe der Erfindung ist es, vorhandene Trennmaschinen mit verbesserter Funktionalität nachrüsten zu können.

Die Aufgabe der Erfindung wird durch den Gegenstand der unabhängigen Ansprüche gelöst. Vorteilhafte Weiterbildungen der Erfindung sind in den Unteransprüchen definiert.

Erfindungsgemäß wird eine Trennmaschine zum Bearbeiten von Werkstücken bereit gestellt, welche eine Trennscheibe zum Durchführen von Trennschnitten in einem Werkstück, z.B. einem Prüfling, und einen Antriebsmotor zum Antreiben der Trennscheibe umfasst.

Die Trennmaschine umfasst einen Werktisch zum Befestigen des zu bearbeitenden Werkstücks, wobei der Werktisch eine x-z-Ebene, z.B. die horizontale Ebene, definiert.

Mittels einer ersten Verschiebeeinrichtung kann eine Relativverschiebung zwischen dem Werkstück und der Trennscheibe in einer ersten Richtung in der x-z-Ebene vorgenommen werden, um das Werkstück für Trennschnitte mit der Trennscheibe in der ersten Richtung in der x-z-Ebene relativ zu der Trennscheibe zu positionieren. Die Verschiebung kann je nach Trennmaschine z.B. durch eine Linearverschiebung des Werktisches oder durch eine Linearverschiebung der Trennscheibe erfolgen.

Die Trennmaschine umfasst ferner eine Werkstück-Positioniereinrichtung mit einer Einspannvorrichtung zum Einspannen des Werkstücks. Die Werkstück-Positioniereinrichtung umfasst eine erste maschinelle Dreheinrichtung mittels welcher das in die Einspannvorrichtung eingespannte Werkstück vor oder zwischen dem Durchführen von Trennschnitten um eine erste Drehachse D gedreht bzw. drehend positioniert werden kann.

Nach dem linearen und dem drehenden Positionieren des Werkstücks relativ zur Trennscheibe wird die Trennscheibe mittels einer Hubmechanik in y-Richtung quer zu der x-z-Ebene an das Werkstück angestellt, um mit der Trennscheibe Trennschnitte in dem Werkstück durchzuführen. Ein Trennschnitt in dem Werkstück wird ausgeführt, indem die rotierende Trennscheibe, insbesondere in einer Bewegungsrichtung senkrecht zur Rotationsachse der Trennscheibe, in das Werkstück hineingeführt wird und dabei ein Schleif-/Trennvorgang an dem Werkstück stattfindet. Ein Trennschnitt mit einer Trennscheibe erfolgt insbesondere durch einen schleifenden oder abrasiven Abtrag des Materials des Werkstücks. Daher werden Trennmaschinen manchmal auch als Trennschleifmaschinen bezeichnet. Vorzugsweise wird die Trennscheibe auf das Werkstück abgesenkt, z.B. durch eine Schwenkbewegung, es ist allerdings auch möglich die Kinematik umzukehren und den Werktisch quer zur x-z-Ebene auf die Trennscheibe zu zu bewegen, um die Trennscheibe an das Werkstück anzustellen. Vorzugsweise erfolgt die Bewegung der rotierenden Trennscheibe beim Zustellen und Trennen in der Ebene senkrecht zur Rotationsachse der Trennscheibe. Vorzugsweise ist die Trennscheibe nicht um eine Achse senkrecht zur Rotationsachse der Trennscheibe drehbar. Ferner vorzugsweise erfolgt die Zustellung der Trennscheibe bzw. erfolgen die Trennschnitte, insbesondere ausschließlich, unter Bewegung der Hubmechanik in y-Richtung bei ansonsten in der x-z-Ebene feststehendem Werktisch.

In vorteilhafter Weise kann somit das Werkstück zum Durchführen von Trennschnitten nicht nur linear relativ zu der Trennscheibe positioniert werden, sondern auch gedreht werden, was die Ausführung komplexer Trennaufgaben mit Trennschnitten unter verschiedenen Winkeln ermöglicht. Das Anfahren unterschiedlicher Trennschnitte kann automatisch und ggf. ohne Umspannen des Werkstücks erfolgen. Ferner vorteilhaft kann der Aufwand für komplexe Werkstückentnahmeanweisungen reduziert oder vermieden werden. Hierdurch kann eine Zeitersparnis und eine Reduzierung der manuellen Eingriffe erzielt werden. Mit weiterem Vorteil kann die Anzahl der Einspannwerkzeuge verringert werden und trotzdem können präzise positionierte Trennschnitte durchgeführt werden. Ferner kann die Fehlergefahr minimiert werden.

Vorzugsweise umfasst die Werkstück-Positioniereinrichtung noch eine zweite maschinelle Dreheinrichtung zum drehenden Positionieren des in die Einspannvorrichtung eingespannten Werkstücks um eine zweite Drehachse E vor oder zwischen dem Durchführen von Trennschnitten. Die zweite Drehachse verläuft vorzugsweise quer, insbesondere senkrecht zu der ersten Drehachse D.

Hierdurch können die Flexibilität der Positionierung und der Automatisierungsgrad weiter erhöht, die Bearbeitungszeit weiter verkürzt, sowie die Anzahl manuellen Eingriffe und die Anzahl der Einspannwerkzeuge weiter reduziert werden.

Bevorzugt verläuft die erste Drehachse D senkrecht zur x-z-Ebene des Werktisches und/oder die zweite Drehachse E verläuft parallel zur x-z-Ebene des Werktisches.

Vorzugsweise erlaubt die erste und/oder zweite maschinelle Dreheinrichtung eine Drehung des Werkstücks jeweils um mindestens 90°, besonders bevorzugt um mindestens 180° um die erste bzw. zweite Drehachse. Es hat sich gezeigt, dass eine Drehbarkeit um jeweils 180° plus jeweils 10° Überlauf in beiden Drehrichtungen für die meisten Trennaufgaben ausreichend ist.

Vorzugsweise umfasst die Trennmaschine eine zweite Verschiebeeinrichtung zur Erzeugung einer Relativverschiebung zwischen dem Werkstück und der Trennscheibe in einer zweiten Richtung in der x-z-Ebene quer, insbesondere senkrecht zur der ersten Richtung, um das Werkstück für Trennschnitte mit der Trennscheibe in der ersten und zweiten Richtung, d.h. in beiden Richtungen in der x-z-Ebene relativ zu der Trennscheibe positionieren zu können. Hierzu kann der Werktisch z.B. eine zweidimensionale x-z-Verschiebemechanik umfassen oder der Werktisch ist in einer Richtung x oder z verschiebbar ausgestaltet und die Trennscheibe lässt sich in der zweiten Richtung senkrecht hierzu verschieben, um die zweidimensionale lineare Relativ-Positionierung in der x-z-Ebene zwischen der Trennscheibe und dem Werkstück zu bewerkstelligen.

Insbesondere wenn eine zweidimensionale Verschiebbarkeit in der x-z-Ebene und eine Drehbarkeit um beide Achsen D und E gegeben ist, lässt sich das Werkstück automatisch in fast allen Linearpositionen und Drehstellungen relativ zu der Trennscheibe positionieren, so dass ohne Benutzereingriff und ohne Umspannen fast jeder beliebige Trennschnitt in dem Werkstück durchgeführt werden kann. Dies ist mit einer Ersparnis an manueller Arbeitszeit und Bearbeitungsdauer verbunden. In diesem Fall kann von einer 5-Achsen-Trennmaschine gesprochen werden, wobei zwei Achsen von der x-z-Verschiebung, zwei Achsen durch die beiden Drehachsen D und E und die fünfte Achse von der Zustellrichtung y gebildet werden.

Vorzugsweise erfolgt die Zustellung der Trennscheibe bzw. erfolgen die Trennschnitte unter Bewegung der Hubmechanik in y-Richtung, wobei das Werkstück während dem Durchführen der Trennschnitte nicht um die erste und/oder zweite Drehachse gedreht wird. Mit anderen Worten erfolgt vorzugsweise die Positionierung des Werkstückes in der x-Richtung, in der y-Richtung, um die erste Drehachse und/oder um die zweite Drehachse relativ zu der Trennscheibe lediglich zum Positionieren des Werkstücks vor der Durchführung des Trennschnittes und nicht während der Durchführung des Trennschnittes. Die Durchführung des Trennschnittes erfolgt vorzugsweise ausschließlich durch die Betätigung der Hubmechanik zum Zustellen der rotierenden Trennscheibe an das und hinein in das Werkstück.

Gemäß einer bevorzugten Ausführungsform der Erfindung ist die Werkstück-Positioniereinrichtung lösbar auf dem Werktisch festspannbar, z.B. in den typischerweise im Werktisch vorhandenen Spann- oder Montagenuten. Die hat den Vorteil, dass bereits vorhandene Trennmaschinen mit der Werkstück-Positioniereinrichtung nachgerüstet werden können und die Werkstück-Positioniereinrichtung z.B. für Wartungs- oder Reinigungsarbeiten abmontiert werden kann. Ferner kann die Werkstück-Positioniereinrichtung z.B. in den Spann- oder Montagenuten auch an unterschiedlichen Stellen festgespannt werden. Trotzdem kann das Werkstück an der Werkstück-Positioniereinrichtung stabil und vibrationsarm festgespannt sein.

Insbesondere ragt das Werkstück aus der Ebene, die durch den Werktisch definiert wird, hinaus und befindet sich demnach im eingespannten Zustand in einem Raumbereich zwischen dem Werktisch und der Trennscheibe bevor diese an das Werkstück angestellt wird.

Vorzugsweise umfasst die Werkstück-Positioniereinrichtung jeweils einen Schrittmotor und einen von dem Schrittmotor angetriebenen Schneckenantrieb zum drehenden Positionieren des in die Einspannvorrichtung eingespannten Werkstücks um die erste und/oder zweite Drehachse. Bevorzugt ist die erste und/oder zweite maschinellen Dreheinrichtung somit selbsthemmend ausgebildet. Dadurch kann eine stabile Halterung des Werkstücks gewährleistet werden.

Gemäß einer bevorzugten Ausführungsform der Erfindung umfasst die Werkstück-Positioniereinrichtung eine Fixierplatte und ein Drehgehäuse. Die Fixierplatte der Werkstück-Positioniereinrichtung wird lösbar auf dem Werktisch festgespannt, z.B. mittels Spannschrauben in den Spann- oder Montagenuten des Werktisches. Das Drehgehäuse ist drehbar um die Fixierplatte gelagert und das Drehgehäuse wird zum drehenden Positionieren des Werkstücks um die erste Drehachse D, insbesondere mitsamt dem ersten und/oder zweiten Antriebsmotor für die erste und zweite maschinelle Dreheinrichtung, um die Fixierplatte gedreht.

Mit anderen Worten wird zur Drehung um die erste Drehachse D nahezu die gesamte Werkstück-Positioniereinrichtung - bis auf die festgespannte Fixierplatte - gedreht. Dies erlaubt eine stabile Konstruktion und präzise Drehung der Werkstück-Positioniereinrichtung.

Vorzugsweise weist die Werkstück-Positioniereinrichtung elektrische Zuleitungen auf, welche flexibel um die y-Richtung quer zur x-z-Ebene geführt sind, z.B. mit einer biegsamen Kabelkette, manchmal auch Energiekette genannt.

Bevorzugt umfasst die Werkstück-Positioniereinrichtung eine Schnellwechselvorrichtung, in welcher die Einspannvorrichtung verrastbar ist, so dass verschiedene Einspannvorrichtungen an der Werkstück-Positioniereinrichtung festlegbar, aber auch schnell und einfach austauschbar sind.

Die Trennmaschine umfasst ferner vorzugsweise ein Gerätegehäuse, welches die Trennscheibe, den Werktisch, die Werkstück-Positioniereinrichtung und/oder die flexibel geführten Zuleitungen beherbergt und einen verschließbaren Arbeitsraum definiert. Das Gerätegehäuse weist hierzu eine Verschlusshaube auf, welche den Arbeitsraum während der Durchführung der Trennschnitte verschließt jedoch vor und nach dem Durchführen der Trennschnitte Zugriff durch den Benutzer auf die Werkstück-Positioniereinrichtung und das Werkstück ermöglicht. In vorteilhafter Weise erfüllt die Trennmaschine somit hohe Sicherheitsanforderungen und ermöglicht das Arbeiten mit hohem Kühlmitteldruck, so dass eine hinreichende Kühlung der Trennscheibe und des Werkstücks gewährleistet sind.

Die Trennmaschine umfasst vorzugsweise eine Programmsteuerung zur automatischen Steuerung der Trennschnitte. Vorzugsweise ist die Steuerung der Werkstück-Positioniereinrichtung bzw. die Steuerung der ersten und/oder zweiten Dreheinrichtung in die vorhandene Programmsteuerung der Trennmaschine integriert, so dass die Programmsteuerung die Relativverschiebung in der ersten und/oder der zweiten Richtung und die Drehung des Werkstücks um die erste und/oder zweite Drehachse vor und zwischen Trennschnitten automatisch steuert, so dass mehrere Trennschnitte an unterschiedlichen Positionen in der x-z-Ebene und mit unterschiedlichen Drehstellungen des Werkstücks nacheinander automatisch von der Programmsteuerung angesteuert werden können.

Ferner vorzugsweise weist die Trennmaschine ein Bedienpanel mit einem oder mehreren Handknöpfen, z.B. Drehknöpfen und/oder sog. Joysticks zum manuellen Ansteuern der ersten und/oder der zweiten Verschiebeeinrichtung und der ersten und/oder zweiten maschinellen Dreheinrichtung auf, um Startpositionen für gewünschte Trennschnitte manuell anfahren zu können.

Insbesondere können zum Programmieren der gewünschten Trennschnitte die Startposition in der ersten und/oder zweiten Richtung in der x-z-Ebene und bezüglich der ersten und/oder zweiten Drehstellung des Werkstücks für den jeweiligen Trennschnitt manuell mit dem oder den Handknöpfen angefahren und in der Programmsteuerung gespeichert werden. Der zugehörige Trennweg und ggf. weitere Trennparameter wie z.B. Vorschubgeschwindigkeit und/oder stoßweiser Vorschub können z.B. als Zahlenwerte oder Check-Boxen über das Bedienpanel in die Programmsteuerung einprogrammiert werden.

Vorzugsweise umfasst die Trennmaschine noch eine Durchmesservermessungseinrichtung für die Trennscheibe, welche den Durchmesser der Trennscheibe automatisch, z.B. vor jedem Trennschnitt innerhalb einer Trennaufgabe mit mehreren Trennschnitten oder auf Benutzeranforderung zwischen den Trennschnitten vermisst. Die Programmsteuerung kann dann die vorher bereits gespeicherten Anfahrts- und Trennwege für die nach jeder Vermessung noch durchzuführenden Trennschnitte von der Programmsteuerung automatisch online an die gemessenen Durchmesserwerte anpassen, um die laufende Abnutzung der Trennscheibe auch innerhalb einer Trennaufgabe mit mehreren einzelnen Trennschnitten zu kompensieren.

Gegenstand der Erfindung ist auch die Werkstück-Positioniereinrichtung zum Befestigen an einem Werktisch einer Trennmaschine, z.B. als Nachrüstteil für bereits vorhandene Trennmaschinen. Die Werkstück-Positioniereinrichtung und demnach
eine Festspannvorrichtung zum Festspannen der Werkstück-Positioniereinrichtung an dem Werktisch der Trennmaschine,
eine Einspannvorrichtung zum Einspannen eines Werkstücks und
eine erste maschinelle Dreheinrichtung zum drehenden Positionieren des in die Einspannvorrichtung eingespannten Werkstücks um eine erste Drehachse D und/oder eine zweite maschinelle Dreheinrichtung zum drehenden Positionieren des in die Einspannvorrichtung eingespannten Werkstücks um eine zweite Drehachse E vor oder zwischen dem Durchführen von Trennschnitten, um die Trennschnitte in unterschiedlichen Drehstellungen durchzuführen, ohne das Werkstück manuell umzuspannen.

Die Erfindung stellt demnach eine Trennmaschine zum Bearbeiten von Werkstücken mit einer rotierenden Trennscheibe bereit, welche umfasst
eine Trennscheibe und einen Antriebsmotor zum Antreiben der Trennscheibe,
eine Einspannvorrichtung zum Einspannen des Werkstücks,
Mittel zum maschinellen Positionieren des Werkstücks entlang einer oder zwei linearen Richtungen und zusätzlich um eine oder zwei Drehachsen und
eine Hubmechanik zum Anstellen der Trennscheibe an das Werkstück, um mit der Trennscheibe Trennschnitte in dem positionierten Werkstück durchzuführen.

Im Folgenden wird die Erfindung anhand von Ausführungsbeispielen und unter Bezugnahme auf die Figuren näher erläutert, wobei gleiche und ähnliche Elemente teilweise mit gleichen Bezugszeichen versehen sind und Merkmale verschiedener Ausführungsbeispiele miteinander kombiniert werden können.

### Kurzbeschreibung der Figuren

Es zeigen:
- Fig. 1: eine perspektivische Darstellung einer Trennmaschine Brillant 275 der Anmelderin,
- Fig. 2: eine ausschnittsweise perspektivische Darstellung einer Trennmaschine gemäß einem Ausführungsbeispiel der vorliegenden Erfindung,
- Fig. 3: wie Fig. 2 mit einer um die vertikale Achse D gedrehten Werkstück-Positioniereinrichtung,
- Fig. 4: die Trennmaschine aus Fig. 3 in einer Frontalansicht,
- Fig. 5: wie Fig. 2 mit eingespanntem Werkstück,
- Fig. 6: eine perspektivische Darstellung eines beispielhaften Werkstücks mit zwölf eingezeichneten durchzuführenden Trennschnitten als komplexe Trennaufgabe,
- Fig. 7: eine perspektivische Darstellung der Werkstück-Positioniereinrichtung montiert auf dem Werktisch der Trennmaschine,
- Fig. 8: eine teilweise transparente Draufsicht auf die erste maschinelle Dreheinrichtung der Werkstück-Positioniereinrichtung,
- Fig. 9: ein vertikalen Querschnitt entlang der Linie 9-9 in Fig. 8,
- Fig. 10: einen Querschnitt entlang der Linie 10-10 in Fig. 9,
- Fig. 11: eine teilweise transparente Ansicht von unten auf die zweite maschinelle Dreheinrichtung der Werkstück-Positioniereinrichtung,
- Fig. 12: eine teilweise transparente Ansicht von oben auf die zweite maschinelle Dreheinrichtung aus Fig. 11,
- Fig. 13: einen vertikalen Querschnitt entlang der Linie 13-13 in Fig. 12,
- Fig. 14: einen Querschnitt entlang der Linie 14-14 in Fig. 13,
- Fig. 15: eine perspektivische Darstellung der Werkstück-Positioniereinrichtung,
- Fig. 16: eine perspektivische Darstellung einer Einspannvorrichtung für ein zylindrisches Werkstück mit Anschlussbolzen für eine Schnellwechselvorrichtung,
- Fig. 17: eine teilweise geschnittene Ansicht der Einspannvorrichtung aus Fig. 16.

### Detaillierte Beschreibung der Erfindung

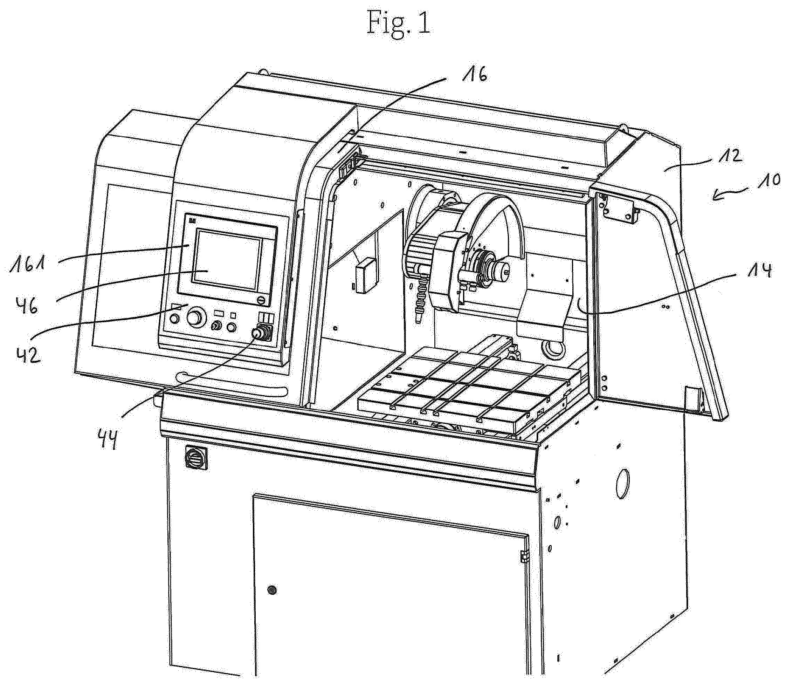

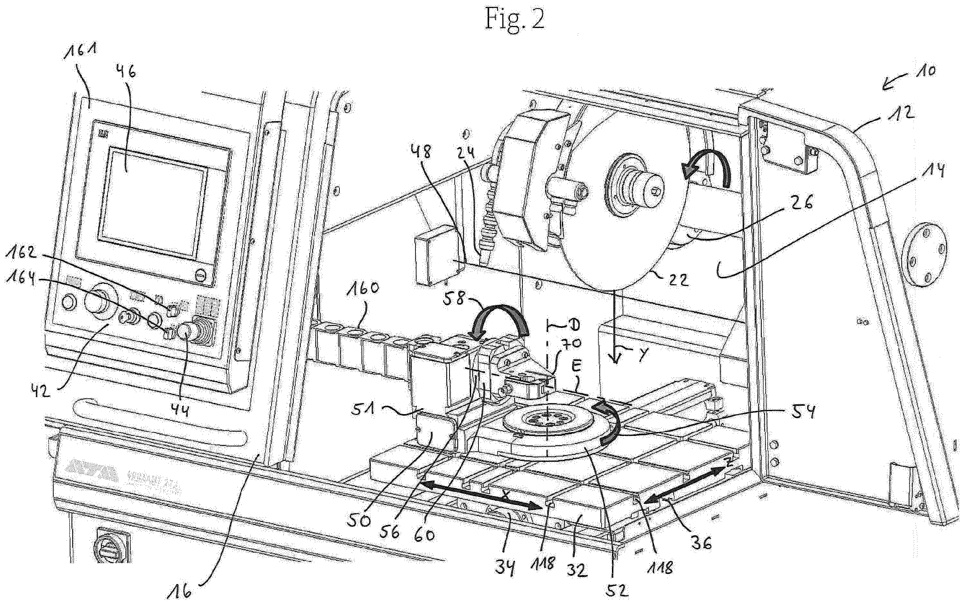

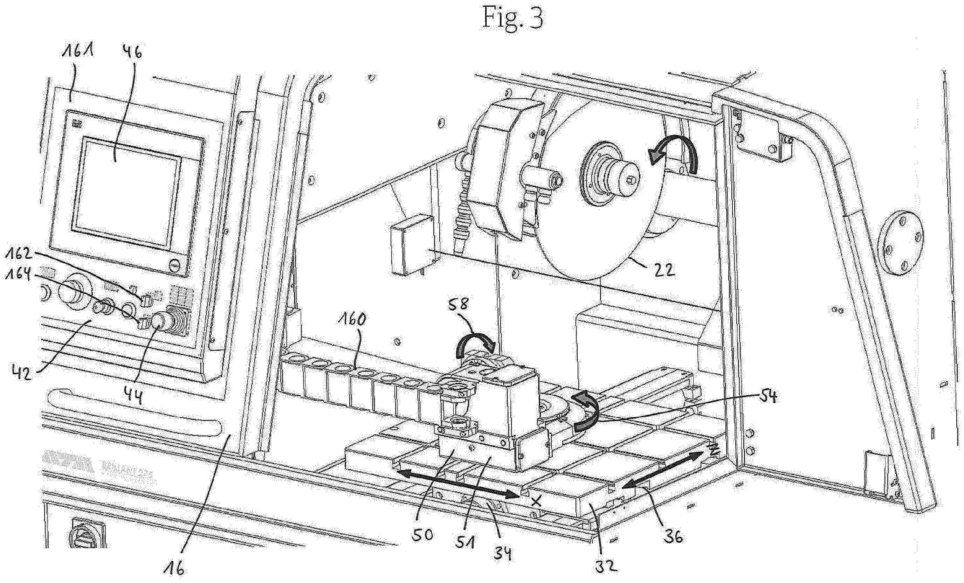

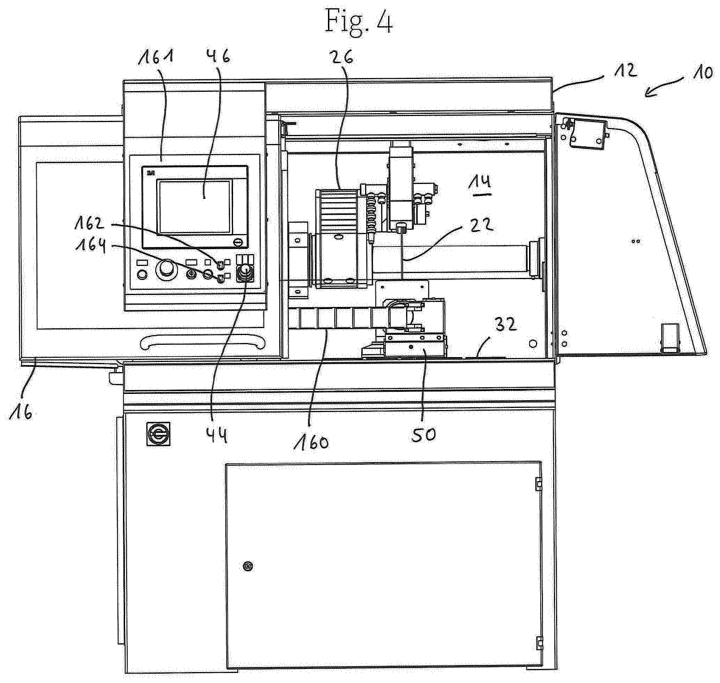

Fig. 1 zeigt eine Trennmaschine, genauer eine Nasstrennschleifmaschine von Typ Brillant 275 der Anmelderin, welche mit der vorliegenden Erfindung nachgerüstet werden kann, wie anhand der Fig. 2 bis 5 ersichtlich ist.

Bezug nehmend auf die Fig. 1 bis 5 weist die Trennmaschine 10 ein Gerätegehäuse 12 auf, welches einen Arbeitsraum 14 definiert, welcher mittels einer verschiebbaren Verschlusshaube 16 geöffnet und verschlossen werden kann, um Zugriff auf den Arbeitsraum 14 zu erhalten. In dem Arbeitsraum 14 ist eine Trennscheibe 22, in diesem Beispiel eine Korund-Trennscheibe 22 angeordnet, welche von einem Antriebsmotor angetrieben wird, der sich in dem Gerätegehäuse 12 befindet (in der Darstellung nicht sichtbar). Kühlmitteldüsen 24 sorgen beim Durchführen der Trennschnitte für eine entsprechende Kühlung der Trennscheibe 22 sowie des Werkstücks. Die Trennscheibe 22 wird durch eine Hubmechanik 26, im vorliegenden Beispiel ausgebildet als Schwenkmechanik, in Richtung der y-Achse abgesenkt, um an das Werkstück angestellt zu werden und die gewünschten Trennschnitte durchzuführen.

Im Arbeitsraum 14 ist ein Werktisch 32 angeordnet, welcher mittels einer x-z-Verschiebereinrichtung 34, 36 zweidimensional in der x-z-Ebene verschiebbar gelagert ist. Die Ansteuerung der maschinellen Verschiebung des Werktisches 32 in der x-Richtung und in der z-Richtung sowie das Zustellen der Trennscheibe 22 in y-Richtung wird durch eine Programmsteuerung 42 automatisch gesteuert, wobei die Ansteuerung von Startpositionen für einzelne Trennschnitte auch manuell mittels eines Joysticks 44 durchgeführt werden kann. Mit dem Joystick 44 kann der Werktisch 32 manuell in der x- und z-Richtung verschoben werden. Zahlenwerte können über ein Touchscreen-Display 46 eingegeben werden, zum Beispiel die gewünschten Schnittwege oder Schnitttiefen.

Vor jedem Trennschnitt kann mittels einer Lasermessvorrichtung 48, automatisch oder per Benutzeranforderung der aktuelle Durchmesser der Trennscheibe 22 vermessen werden, um die fortschreitende Abnutzung der Trennscheibe 22 automatisch in die zuvor programmierten Trennschnitte einzuberechnen und so die Abnutzung der Trennscheibe 22 zwischen den einzelnen Trennschnitten während einer laufenden Trennaufgabe automatisch kompensieren zu können.

Auf dem Werktisch 32 ist eine Werkstück-Positioniereinrichtung 50 festgespannt, welche eine Schnellwechselplatte 60 trägt, in welcher wiederum die Einspannvorrichtung 70 für das zu bearbeitende Werkstück 80 mittels Schnellspannverrastung festgelegt ist. Die Werkstück-Positioniereinrichtung 50 umfasst eine erste maschinelle Dreheinrichtung 52 welche die Werkstück-Positioniereinrichtung 50 um eine vertikale erste Drehachse D dreht, symbolisiert durch den Pfeil 54. Ferner umfasst die Werkstück-Positioniereinrichtung 50 eine zweite maschinelle Dreheinrichtung 56 welche die Einspannvorrichtung 70 um eine horizontale zweite Drehachse E, welche zur ersten Drehachse D senkrecht steht rotiert, symbolisiert durch den Pfeil 58.

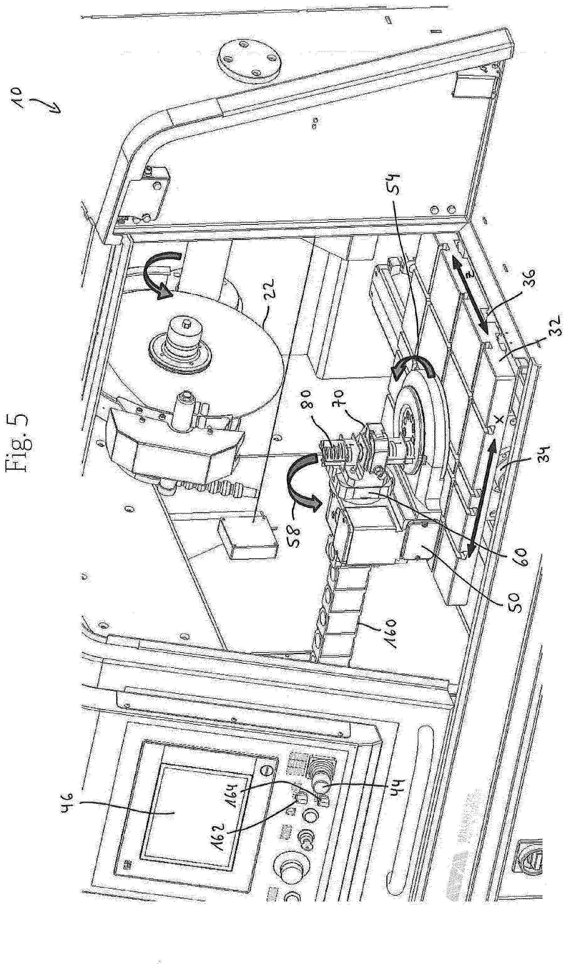

Somit lässt sich das in die Einspannvorrichtung 70 eingespannte Werkstück 80 (Fig. 5) mittels des Werktisches 32 in beiden Richtungen x und z der Werktischebene x-z durch Verschiebung des Werktisches 32 verschieben und zusätzlich mittels der Werkstück-Positioniereinrichtung 50 um die beiden Achsen D und E drehen, was eine vielfältige Positioniermöglichkeit für das Werkstück 80 bedeutet. Dadurch können selbst bei komplexen Trennaufgaben mit mehreren Trennschnitten unter verschiedenen Winkeln und in verschiedenen Richtungen die entsprechenden Trennschnitte automatisch durchgeführt werden, ohne dass ein manueller Benutzereingriff, insbesondere ohne dass ein Umspannen des Werkstücks 80, notwendig ist.

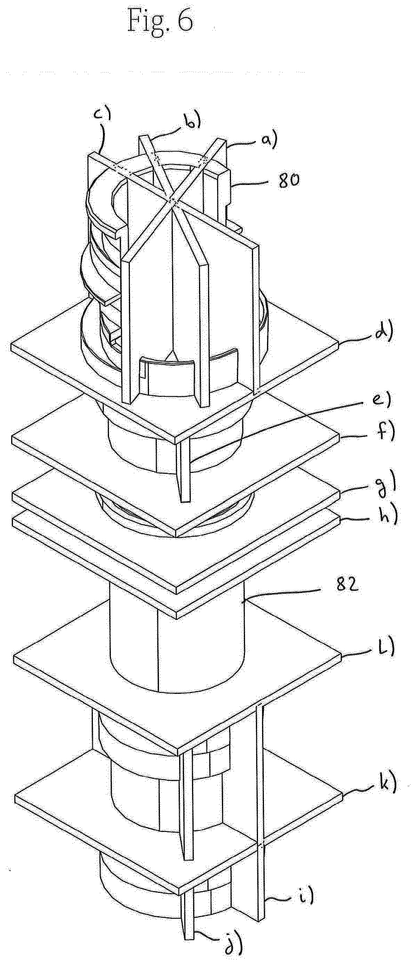

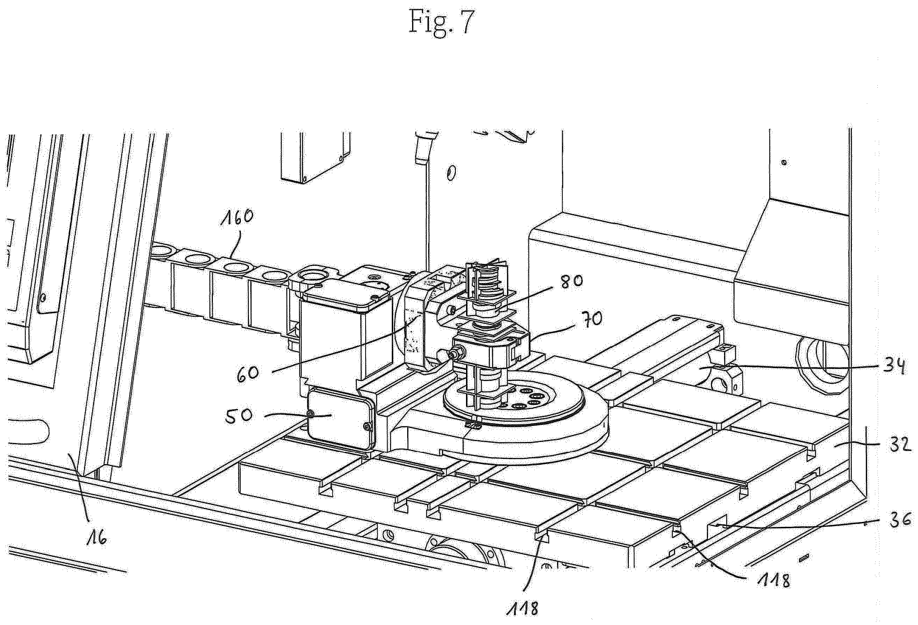

Fig. 6 zeigt einen Prüfling als beispielhaftes Werkstück in Form einer Nockenhülse eines Verbrennungsmotors, an welcher als komplexe Trennaufgabe insgesamt 12 Trennschnitte a) bis l) durchgeführt werden sollen, zum Beispiel um Gefügeuntersuchungen an verschiedenen Stellen der Nockenhülse durchzuführen. Mit der erfindungsgemäßen Trennmaschine 10 ist es möglich, alle 12 Trennschnitte a) bis l) vollautomatisiert und ohne Umspannen des Werkstücks 80 vorzunehmen. Die Nockenhülse 80 wird dabei in Bereich des Abschnitts 82 in die Einspannvorrichtung 70 eingespannt, wie dies zum Beispiel in Fig. 5 und 7 dargestellt ist.

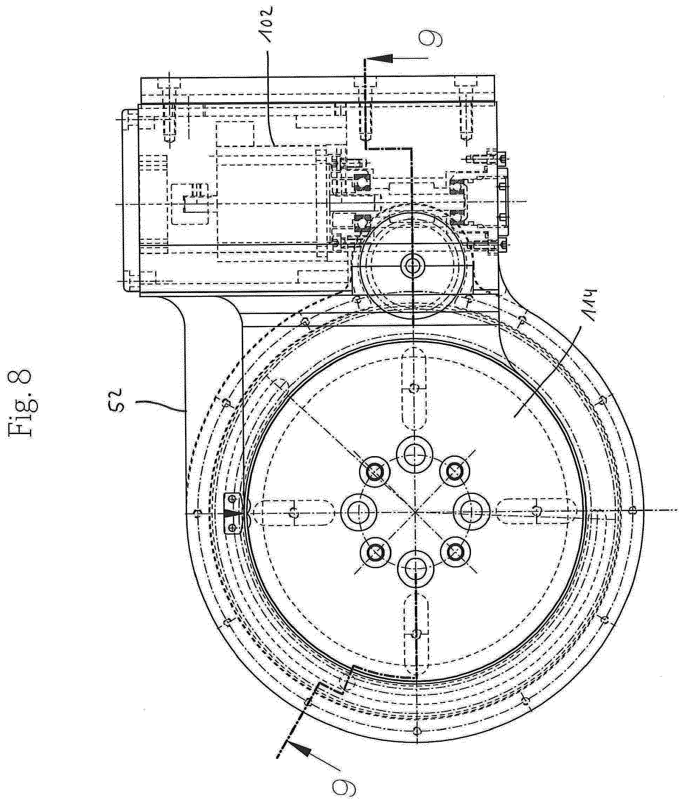

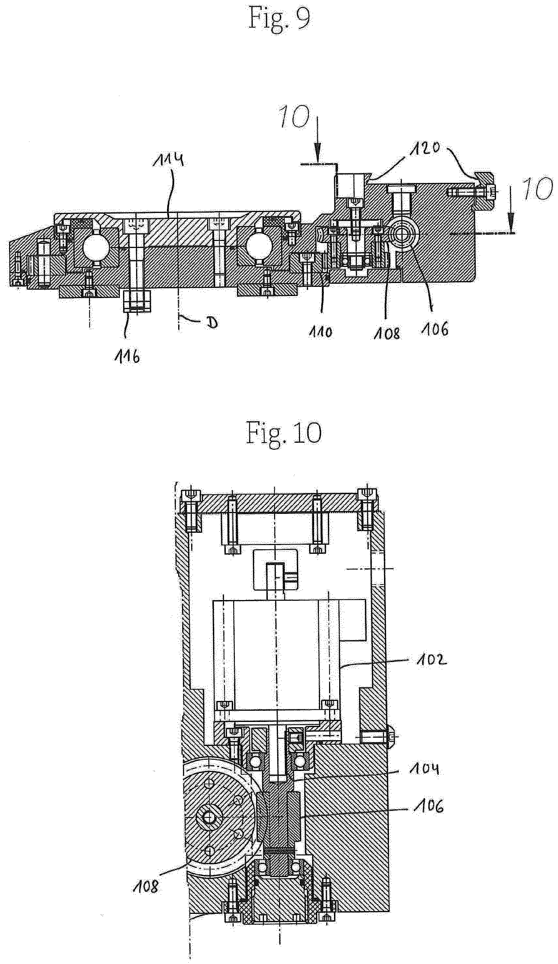

Bezug nehmend auf die Fig. 8 bis 10 weist die Werkstück-Positioniereinrichtung 50 eine untere Dreheinrichtung 52 auf. Ein 2-Phasen-Schrittmotor 102 treibt über eine Motorwelle 104 eine Schnecke 106 an, welche wiederum ein Schneckenrad 108 antreibt. Das Schneckenrad 108 läuft um einen Zahnkranz 110 um. Eine Kopfplatte 114 ist mit Spannelementen 116 in Nuten 118 des Werktisches fest verspannt, wodurch die Werkstück-Positioniereinrichtung 50 fest auf dem Werktisch 32 verspannt ist. Durch den Eingriff des Schneckenrades 108 in den Zahnkranz 110 dreht sich, angetrieben durch den Schrittmotor 102, die gesamte Werkstück-Positioniereinrichtung 50 mit ihrem Drehgehäuse 51 um die Kopfplatte 114, bzw. um die Drehachse D herum.

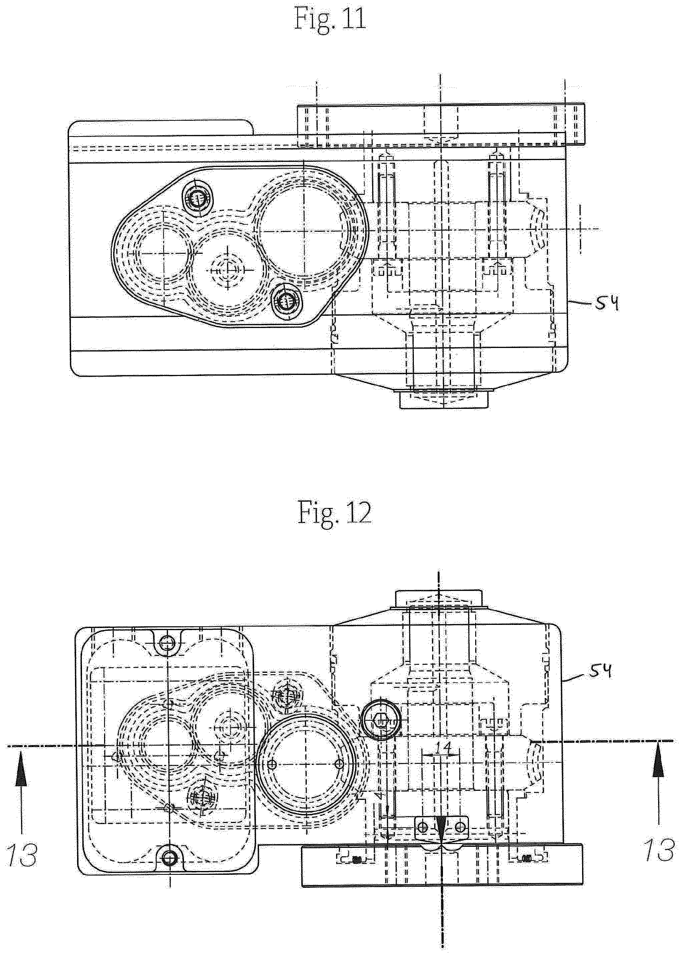

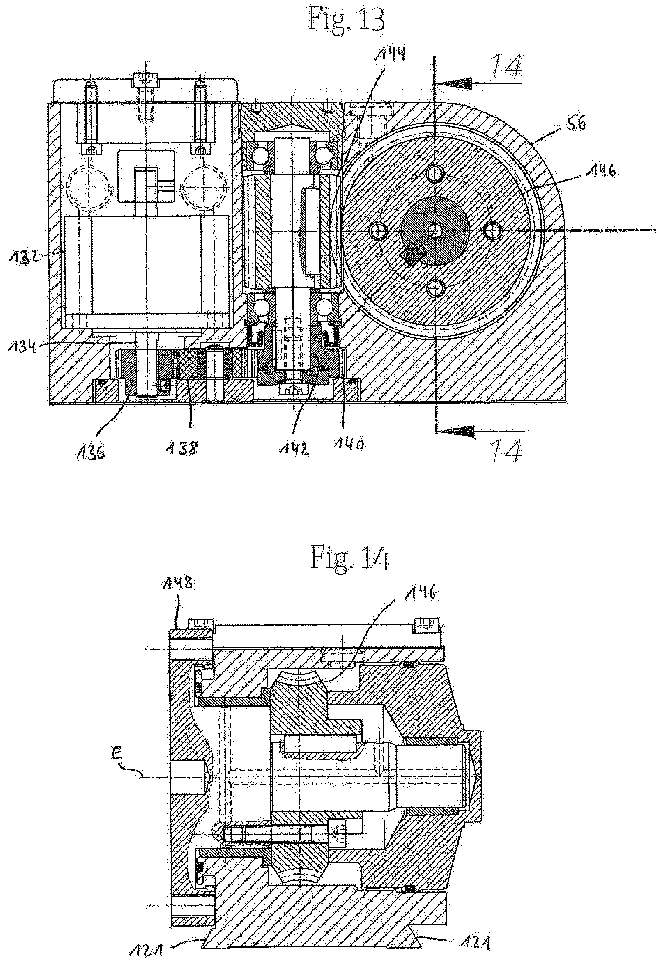

Mit einer Schwalbenschwanzführung 120, 121 ist die zweite Dreheinrichtung 56 (Fig. 11 bis 14) starr mit der ersten Dreheinrichtung 52 verbunden.

Bezug nehmend auf die Fig. 11 bis 14 umfasst die zweite Dreheinrichtung 56 einen 2-Phasen Schrittmotor 132, welcher über eine Motorwelle 134 ein Ritzel 136 antreibt. Das Ritzel 136 treibt über ein Zwischenzahnrad 138 und ein Ritzel 140 die Schneckenwelle 142 an. Die auf der Schneckenwelle 142 sitzende Schnecke 144 treibt das Schneckenrad 146 an, welches mit der Antriebsplatte 148 verbunden ist und diese um die Drehachse E dreht.

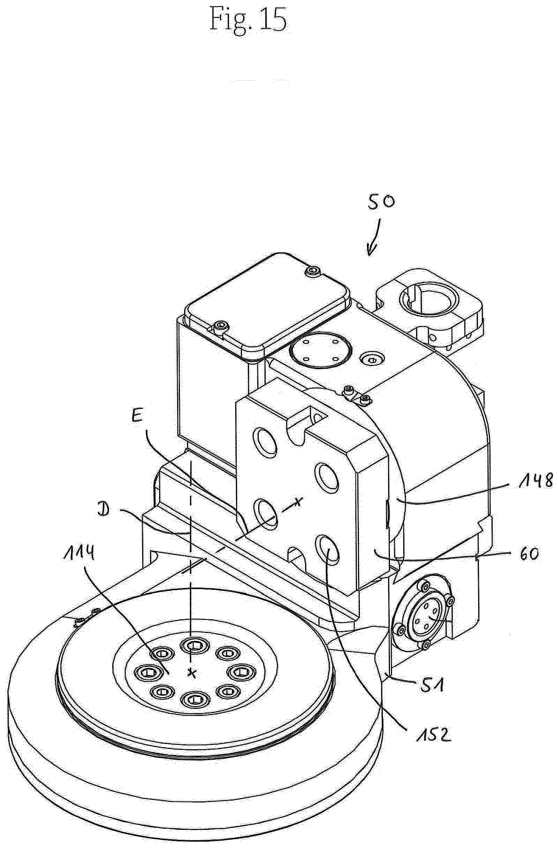

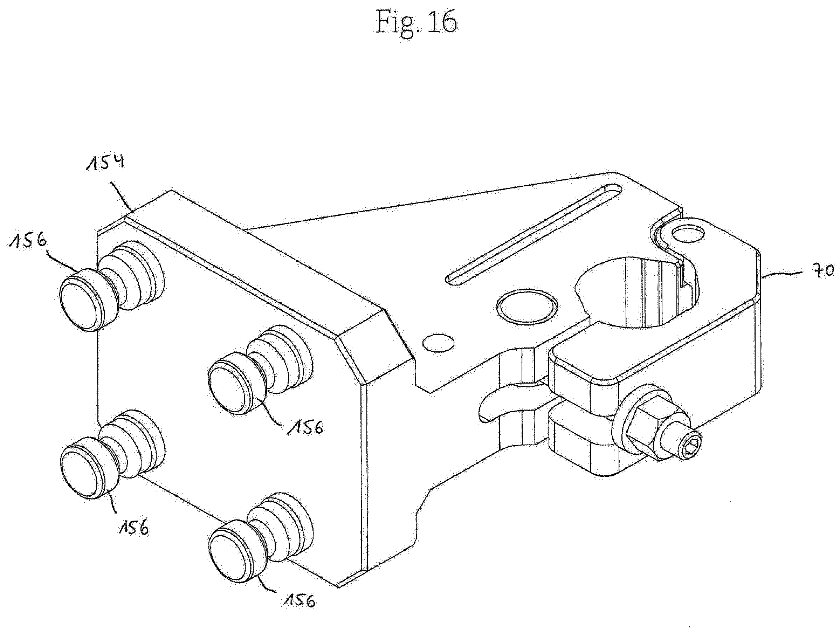

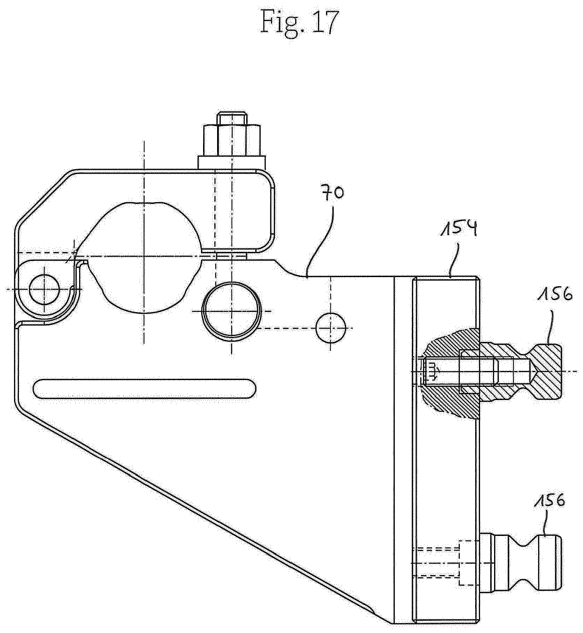

Bezug nehmend auf die Fig. 15 bis 17 ist an der Antriebsplatte 148 eine Schnellwechselplatte 60 mit einer Schnellrastaufnahme 152 befestigt. Die Einspannvorrichtung 70 besitzt eine Anschlussplatte 154 mit Schnellspannzapfen 156, welche in der Schnellrastaufnahme 152 verrastbar und leicht wieder lösbar sind. Hierdurch können verschiedene Werkstücke mit zugehörigen Einspannvorrichtungen 70 in einfacher und schneller Weise eingesetzt und ausgewechselt werden.

Die Steuerung der ersten und zweiten maschinellen Dreheinrichtungen 52, 56 ist in die Programmsteuerung 42 der Trennmaschine 10 integriert. Das Bedienpanel 161 der Trennmaschine 10 weist neben dem Joystick 44 für die x-z-Ansteuerung des Werktisches 32 noch zwei Drehknöpfe 162, 164 auf, mit welchen die erste und zweite manuelle Dreheinrichtung 52, 56 manuell gesteuert werden können. So kann zum Beispiel eine komplexe Trennaufgabe wie diejenige der Nockenhülse 80 in Fig. 6 dadurch programmiert werden, dass mittels der manuellen Bedienelemente 44, 162, 164 jede Startposition der einzelnen durchzuführenden Trennschnitte manuell angefahren wird. Die Programmsteuerung 42 speichert dann automatisch die manuell angefahrenen Positionen als jeweilige Startpositionen für jeden durchzuführenden Trennschnitt. Die Tiefe der Trennschnitte kann dann über das Touchscreen-Display 46 einprogrammiert werden. Anschließend wird die Haube 16 geschlossen und die gesamte Trennaufgabe, umfassend die Durchführung der 12 Trennschnitte a) bis l), wird vollautomatisch ausgeführt. Die Programmsteuerung 42 umfasst demnach einen Multi-Positions-Prozess, welcher es erlaubt, mehrere Trennschritte nacheinander zu programmieren und automatisch auszuführen, wobei das Programmieren Schritt für Schritt erfolgen kann.

Die erfindungsgemäße Trennmaschine kann somit als 5-Achsen-Trennmaschine 10 bezeichnet werden. Hierbei bezeichnen die linearen Achsen x und z die zweidimensionale Verschiebung des Werktisches 32, die Achse y die Zustellrichtung zwischen der Trennscheibe 22 und dem Werkstück 80 und die zusätzlichen Achsen D und E die beiden Drehachsen, um welche das Werkstück 80 zusätzlich zur x-z-Verschiebung gedreht werden kann.

Diese Anmeldung ist eine Teilanmeldung aus der Europäischen Patentanmeldung EP 17 704 453.4 (EP 3 414 050), welche hiermit, in der Version wie ursprünglich eingereicht, durch Referenz inkorporiert wird. Die Anmelderin behält sich das Recht vor, zu jedem Gegenstand, der in der Stammanmeldung EP 17 704 453.4 (EP 3 414 050) offenbart ist, in dieser Teilanmeldung oder in einer oder mehreren möglichen weiteren Teilanmeldungen zurückzukehren und diesen zu beanspruchen, unabhängig von den nachfolgenden Patentansprüchen.

Es ist dem Fachmann ersichtlich, dass die vorstehend beschriebenen Ausführungsformen beispielhaft zu verstehen sind und die Erfindung nicht auf diese beschränkt ist, sondern in vielfältiger Weise variiert werden kann, ohne den Schutzbereich der Ansprüche zu verlassen. Ferner gelten alle Merkmale, die in Verbindung mit der Trennmaschine offenbart sind auch in Verbindung mit der Werkstück-Positioniereinrichtung als offenbart und vice versa. ist ersichtlich, dass die Merkmale unabhängig davon, ob sie in der Beschreibung, den Ansprüchen, den Figuren oder anderweitig offenbart sind, auch einzeln wesentliche Bestandteile der Erfindung definieren, selbst wenn sie zusammen mit anderen Merkmalen gemeinsam beschrieben sind.

## Patentansprüche

1. Verfahren zum Durchführen von Trennschnitten in einem Werkstück (80) mit einer rotierenden Trennscheibe (22) in einer Trennmaschine (10), umfassend die Trennscheibe (22) und einen Antriebsmotor zum Antreiben der Trennscheibe (22), mit folgenden Schritten:
Einspannen des Werkstücks (80) in eine Einspannvorrichtung (70),
maschinelles Positionieren (34, 36, 52, 56) des Werkstücks (80) entlang einer oder zwei linearen Richtungen (x, z) und zusätzlich um eine oder zwei Drehachsen (D, E) und Anstellen der Trennscheibe (22) an das Werkstück (80) mit einer Hubmechanik (26), um mit der Trennscheibe (22) die Trennschnitte in dem positionierten Werkstück (80) durchzuführen.

2. Verwendung einer Trennmaschine (10) zum Durchführen von Trennschnitten in einem Werkstück (80) mit einer rotierenden Trennscheibe (22), zum Abtrennen von Probenstücken von dem zu untersuchenden Werkstück (80), indem Probenstücke aus dem Werkstück (80) herausgeschnitten werden, insbesondere um Gefügeuntersuchungen an verschiedenen Stellen des Werkstücks (80) durchzuführen, wobei die Trennmaschine umfasst:
eine Trennscheibe (22) und einen Antriebsmotor zum Antreiben der Trennscheibe (22),
eine Einspannvorrichtung (70) zum Einspannen des Werkstücks (80),
Mittel zum maschinellen Positionieren (34, 36, 52, 56) des Werkstücks (80) entlang einer oder zwei linearen Richtungen (x, z) und zusätzlich um eine oder zwei Drehachsen (D, E) und
eine Hubmechanik (26) zum Anstellen der Trennscheibe (22) an das Werkstück (80), um mit der Trennscheibe (22) die Trennschnitte in dem positionierten Werkstück (80) durchzuführen.

3. Trennmaschine (10) zum Bearbeiten von Werkstücken (80) mit einer rotierenden Trennscheibe (22), umfassend
eine Trennscheibe (22) und einen Antriebsmotor zum Antreiben der Trennscheibe (22),
einen Werktisch (32) zum Befestigen eines zu bearbeitenden Werkstücks (80), wobei der Werktisch (32) eine x-z-Ebene definiert,
eine erste Verschiebeeinrichtung (34) zur Erzeugung einer Relativverschiebung zwischen dem Werkstück (80) und der Trennscheibe (22) in einer ersten Richtung in der x-z-Ebene, um das Werkstück (80) für Trennschnitte (22) mit der Trennscheibe (22) in der ersten Richtung in der x-z-Ebene relativ zu der Trennscheibe (22) zu positionieren,
eine Werkstück-Positioniereinrichtung (50) mit einer Einspannvorrichtung (70) zum Einspannen des Werkstücks (80) und einer ersten maschinellen Dreheinrichtung (52) zum drehenden Positionieren des in die Einspannvorrichtung (70) eingespannten Werkstücks (80) um eine erste Drehachse (D) vor oder zwischen dem Durchführen von Trennschnitten und
eine Hubmechanik (26) zum Anstellen der Trennscheibe (22) an das Werkstück (80) in y-Richtung quer zu der x-z-Ebene, um mit der Trennscheibe (22) Trennschnitte in dem Werkstück (80) durchzuführen.

4. Trennmaschine (10) nach Anspruch 3,
wobei die Werkstück-Positioniereinrichtung (50) eine zweite maschinelle Dreheinrichtung (56) zum drehenden Positionieren des in die Einspannvorrichtung (70) eingespannten Werkstücks (80) um eine zweite Drehachse (E) vor oder zwischen dem Durchführen von Trennschnitten umfasst.

5. Trennmaschine (10) nach Anspruch 3 oder 4,
wobei die erste Drehachse (D) senkrecht zur x-z-Ebene und/oder die zweite Drehachse (E) parallel zur x-z-Ebene verlaufen.

6. Trennmaschine (10) nach einem der vorstehenden Ansprüche,
wobei die erste und/oder zweite maschinelle Dreheinrichtung (52, 56) eine Drehung des Werkstücks jeweils um mindestens 90° um die erste bzw. zweite Drehachse (D, E) erlaubt.

7. Trennmaschine (10) nach einem der vorstehenden Ansprüche,
ferner umfassend eine zweite Verschiebeeinrichtung (36) zur Erzeugung einer Relativverschiebung zwischen dem Werkstück (80) und der Trennscheibe (22) in einer zweiten Richtung in der x-z-Ebene quer zu der ersten Richtung, um das Werkstück (80) für Trennschnitte mit der Trennscheibe (22) in der ersten und zweiten Richtung in der x-z-Ebene relativ zu der Trennscheibe (22) zu positionieren.

8. Trennmaschine (10) nach einem der vorstehenden Ansprüche,
wobei die Werkstück-Positioniereinrichtung (50) lösbar auf dem Werktisch (32) festspannbar ist und/oder wobei die Werkstück-Positioniereinrichtung (50) Zuleitungen (160) aufweist, welche flexibel um die y-Richtung quer zur x-z-Ebene geführt sind.

9. Trennmaschine (10) nach einem der vorstehenden Ansprüche,
wobei die Werkstück-Positioniereinrichtung (50) jeweils einen Schrittmotor (102, 132) und einen von dem Schrittmotor (102, 132) angetriebenen Schneckenantrieb (106, 108, 144, 146) zum drehenden Positionieren des in die Einspannvorrichtung (70) eingespannten Werkstücks (80) um die erste und/oder zweite Drehachse (D, E) umfasst und/oder wobei die Werkstück-Positioniereinrichtung (50) eine Schnellwechselvorrichtung (60) umfasst, mittels welcher verschiedene Einspannvorrichtungen (70) an der Werkstück-Positioniereinrichtung (50) festlegbar sind.

10. Trennmaschine (10) nach einem der vorstehenden Ansprüche,
umfassend ein Gerätegehäuse (12), welches die Trennscheibe (22), den Werktisch (32), die Werkstück-Positioniereinrichtung (50) und/oder die flexibel geführten Zuleitungen (160) beherbergt und einen Arbeitsraum (14) definiert, wobei das Gerätegehäuse (12) eine Verschlusshaube (16) aufweist, welche den Arbeitsraum (14) während der Durchführung der Trennschnitte verschließt und vor und nach dem Durchführen der Trennschnitte Zugriff durch den Benutzer auf die Werkstück-Positioniereinrichtung (50) und das Werkstück (80) ermöglicht.

11. Trennmaschine (10) nach einem der vorstehenden Ansprüche,
umfassend eine Programmsteuerung (42), in welche die Steuerung der ersten und/oder zweiten Dreheinrichtung (52, 56) integriert ist, so dass die Programmsteuerung (42) die Relativverschiebung in der ersten und/oder zweiten Richtung und die Drehung des Werkstücks (80) um die erste und/oder die zweite Drehachse (D, E) vor und zwischen Trennschnitten automatisch steuert, so dass das mehrere Trennschnitte an unterschiedlichen Positionen in der x-z-Ebene und mit unterschiedlichen Drehstellungen des Werkstücks (80) nacheinander automatisch angesteuert werden.

12. Trennmaschine (10) nach einem der vorstehenden Ansprüche,
umfassend einen oder mehrere Hand-Bedienelemente (44, 162, 164) zum manuellen Ansteuern der ersten und/oder zweiten Verschiebeeinrichtung (34, 36) und der ersten und/oder zweiten maschinellen Dreheinrichtung (52, 56), um gewünschte Trennschnitte manuell anfahren zu können.

13. Trennmaschine (10) nach einem der vorstehenden Ansprüche,
wobei zum Programmieren der gewünschten Trennschnitte die Startposition in der ersten und/oder zweiten Richtung in der x-z-Ebene und bezüglich der ersten und/oder der zweiten Drehstellung des Werkstücks (80) für den jeweiligen Trennschnitt manuell mit dem oder den Handbedienelementen (44, 162, 164) angefahren und gespeichert wird und der zugehörige Trennweg und ggf. weitere Trennparameter als Zahlenwerte in die Programmsteuerung (42) einprogrammiert werden.

14. Trennmaschine (10) nach einem der vorstehenden Ansprüche,
umfassend eine Durchmesservermessungseinrichtung (48) für die Trennscheibe (22), welche den Durchmesser der Trennscheibe (22) automatisch oder auf Benutzeranforderung zwischen den Trennschnitten vermisst und wobei die in der Programmsteuerung (42) gespeicherten Anfahrts- und Trennwege für die nach der Vermessung noch durchzuführenden Trennschnitte von der Programmsteuerung (42) automatisch an die gemessenen Durchmesserwerte angepasst werden.

15. Trennmaschine (10) zum Bearbeiten von Werkstücken mit einer rotierenden Trennscheibe (22), insbesondere gemäß einem der vorstehenden Ansprüche, umfassend
eine Trennscheibe (22) und einen Antriebsmotor zum Antreiben der Trennscheibe (22),
eine Einspannvorrichtung (70) zum Einspannen des Werkstücks (80),
Mittel zum maschinellen Positionieren (34, 36, 52, 56) des Werkstücks (80) entlang einer oder zwei linearen Richtungen (x, z) und zusätzlich um eine oder zwei Drehachsen (D, E) und
eine Hubmechanik (26) zum Anstellen der Trennscheibe (22) an das Werkstück (80), um mit der Trennscheibe (22) Trennschnitte in dem positionierten Werkstück (80) durchzuführen.
